# EUROPÄISCHE PATENTSCHRIFT

(11) **EP 1 539 549 B1**
(45) Veröffentlichungstag und Bekanntmachung des Hinweises auf die Patenterteilung: **23.09.2009**
(21) Anmeldenummer: 03709609.6
(22) Anmeldetag: 13.02.2003
(51) Int. Cl.: B60S 1/24, F16C 11/06

(54) **VORRICHTUNG ZUR ABDICHTUNG VON KUGELGELENKEN**
DEVICE FOR SEALING BALL-AND-SOCKET JOINTS
DISPOSITIF POUR RENDRE ETANCHE DES ARTICULATIONS SPHERIQUES

(30) Priorität: 12.09.2002 DE 10242299
(43) Veröffentlichungstag der Anmeldung: 15.06.2005
(73) Patentinhaber: ROBERT BOSCH GMBH, 70442 Stuttgart (DE)
(72) Erfinder: HEINRICH, Laurent, F-67400 Illkirch-Graffenstaden (FR)
(86) Internationale Anmeldenummer: PCT/DE2003/000420
(87) Internationale Veröffentlichungsnummer: WO 2004/026644

(56) Entgegenhaltungen:
- EP-A- 0 612 927
- FR-A- 1 253 387
- GB-A- 809 881
- US-A- 4 241 928
- US-A- 4 902 157
- PATENT ABSTRACTS OF JAPAN vol. 009, no. 300 (M-433), 27. November 1985 (1985-11-27) & JP 60 136669 A (NIPPON DENSO KK), 20. Juli 1985 (1985-07-20)

## Beschreibung

### Technisches Gebiet

Kugelgelenke, die Witterungseinflüssen ausgesetzt sind, bedürfen einer Abdichtung. Bei Wischanlagen von Kraftfahrzeugen, seien es Frontscheibenwischer, Heckscheibenwischer oder Scheinwerferwischer, besteht das Erfordernis, Wischerkomponente aufnehmende Kugelgelenke gegen eindringende Feuchtigkeit zu schützen. Die Abdichtung des Kugelgelenkes muss auch beim Verkippen einer Komponente des Kugelgelenkes an einem Kugelbolzen gewährleistet sein.

### Stand der Technik

DE 196 42 667 A1 bezieht sich auf die Lagerung eines Wischerantriebes. Eine Rohrplatine umfasst zur Lagerung von Antriebswellen mindestens ein rohrförmiges Element, in welches eine Lagerbuchse eingebracht ist. Die Lagerbuchse ist gemäß dieser Lösung formschlüssig gegenüber dem rohrförmigen Element fixiert. An der Antriebswelle ist ein Wischarm aufgenommen, an welchem ein Kugelbolzen eines Kugelgelenkes angeordnet ist. Ein auf der Wischkomponente, die über die Antriebswelle angetrieben wird, aufgenommener Kugelbolzen geht ebenfalls aus der DE 196 42 666 A1 hervor.

Aus der GB 809 881 A ist ein gattungsgemäßes Kugelgelenk bekannt. Es besitzt ein Dichtungseiemcnt aus Kunststoff, das mit einem ersten schalenförmige Teil an einer sphärischen Oberfläche einer Kugelschale dichtend anliegt, während ein sich in cntgcgengesetzer Richtung öffnender, zweiter schalenförmiger Teil in montiertem Zustand mit seiner Randzone an einem Trägerkörper abstützt. Dieser schalenförmige Teil ist federn elastisch und drückt den der Kugelschale zugewandten ersten schalenförmige Teil dichtend gegen diese. In montiertem Zustand verläuft der zweite Schalenteil ausgehend von einer Kontaktfläche zum Trägerkörper nach innen geneigt zu diesem, wobei ein flacher Winkel zwischen dem Trägerkörper und dem zweiten schalenförmigen Teil entsteht. An der Stelle, an der der erste schalenförmige Teil mit dem zweiten schalenförmigen Teil verbunden ist, liegt das Abdichtelement eng am Kugelbolzen an.

### Darstellung der Erfindung

Erfindungsgemäß wird ein ringförmig ausgebildetes Abdichtelement vorgeschlagen, das aus einem Kunststoffmaterial besteht und einen an einer Wischkomponente befestigten Kugelbolzen umgibt. Nach Montage der Kugelschale am Kugelbolzen wird das den Hals des Kugelbolzens umgebende Dichtelement an der Kugelschale zentriert. An der dem Abdichtelement zuweisenden Seite der Kugelschale, der Einpressseite des Kugelbolzens, ist die Kugelschale mit einer Dichtfläche versehen. Die Dichtfläche der Kugelschale ist in einem Radius bezogen auf das Zentrum der Kugel des Kugelbolzens ausgerührt, der dem Radius entspricht, den das Dichtelement auf der der Kugelschale zuweisenden Seite aufweist. Dadurch ergibt sich beim Fügen der Kugelschale auf den Kugelbolzen mit an diesem angeordneten Dichtelement eine ringförmige, gekrümmte Anlagefläche zwischen Abdichtelement und Unterseite der Kugelschale, deren Dichtwirkung auch bei einer Relativbewegung der Kugelschale zum Abdichtelement aufrecht erhalten bleibt. Auf der einem Trägerkörper zuweisenden Seite weist das Abdichtelement zwei elastisch, federnd ausgebildete Ringflächen auf. Diese dienen einerseits der Abdichtung des Kugelgelenkes gegenüber dem Trägerkörper, andererseits der Erzeugung einer Anstellkraft, mit der das Abdichtelement an die Dichtfläche an der Außenseite des unteren Bereiches der Kugelschale anstellt. Dadurch ist sichergestellt, dass die am Abdichtelement innen liegend ausgebildete Dichtfläche stets an die aussen an der Kugelschale ausgebildete Dichtfläche angestellt ist. Eine Relativbewegung der Kugelschale zum Abdichtelement ist somit unter Aufrechterhaltung der Dichtwirkung möglich.

Über die äussere Dichtfläche an der Kugelschale erfolgt eine sich bei der Montage automatisch einstellende Zentrierung des Abdichtelementes in Bezug auf den Kugelbolzen. Dadurch wird eine Automatisierung der Kugelbolzenmontage bei Einsatz des vorgeschlagenen Dichtelements möglich.

An der dem Trägerkörper zuweisenden Seite des Abdichtelementes sind die beiden federnd ausgebildeten Ringflächen angeordnet. Die federnd ausgebildeten Ringflächen sind als Federlippen beschaffen. Dadurch wird eine zweifache Abdichtung erreicht, nämlich über eine aussen auf dem Trägerkörper aufliegende Ringfläche und eine innen auf dem Trägerkörper aufliegende Ringfläche.

### Zeichnung

Anhand der Zeichnung wird die Erfindung nachstehend näher erläutert.

Es zeigt:
- Fig. 1: eine Ausführungsvariante eines Kugelgelenkes mit einem Abdichtelement, welches zwischen der Kugelschale des Kugelgelenkes und dem Trägerkörper aufgenommen ist,
- Fig. 2: das Kugelgelenk gemäß Fig. 1 in verkippter Position,
- Fig. 3: eine Variante eines Kugelgelenkes, die nicht Gegenstand der Erfindung ist, mit einem Dichtelement, an dem eine dem Halsbereich des Kugelbolzens zuwei- sende Ringfläche ausgebildet ist,
- Fig. 4: das Kugelgelenk gemäß Fig. 3 in verkippter Position,
- Fig. 5: eine weitere Ausführungsvariante eines Kugelgelenkes, die nicht Gegenstand der Erfindung ist, mit einem Abdichtelement, wobei dieses einen Innendurch- messer aufweist, der den des Kugelkopfes am Kugelbolzen übersteigt,
- Fig. 6: das Kugelgelenk gemäß Fig. 5 in verkippter Position,
- Fig. 7: eine weitere Ausführungsvariante eines Kugelgelenkes mit einem Abdichtele- ment, die nur teilweise Gegenstand der Erfindung ist, und
- Fig. 8: das Kugelgelenk gemäß Fig. 7 in verkippter Position.

### Ausführungsvarianten

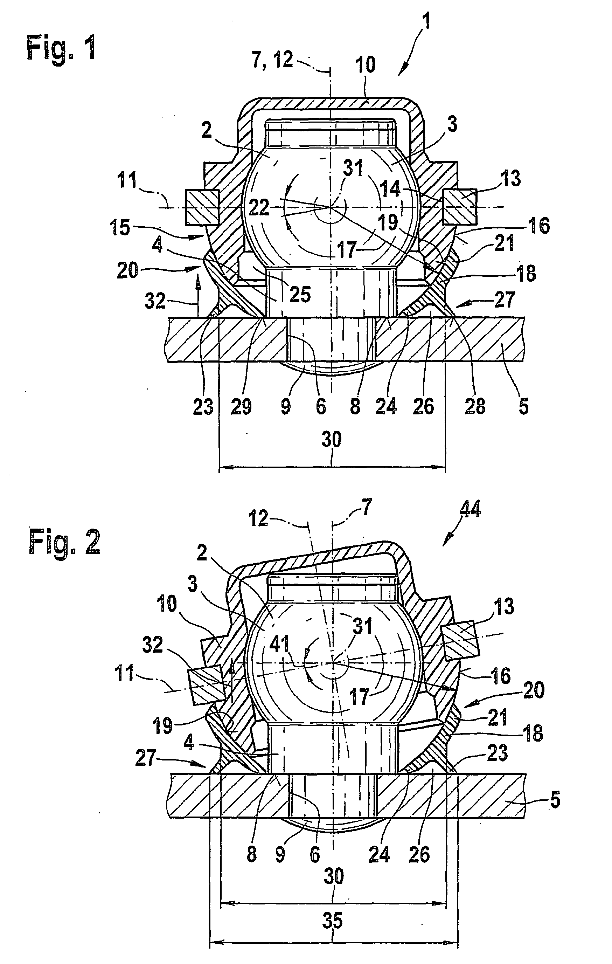

Fig. 1 ist eine Ausführungsvariante eines Kugelgelenkes zu entnehmen, welches von einem Abdichtelement zwischen der Kugelschale und einem den Kugelbolzen aufnehmenden Trägerkörper umschlossen ist.

Ein aus Fig. 1 hervorgehendes Kugelgelenk 1 umfasst einen Kugelbolzen 2, an welchem ein Kugelkopf 3 ausgebildet ist. Der Kugelbolzen 2 ist an einem Trägerkörper 5, beispielsweise einer Wischanlagenkomponente, aufgenommen. Der Kugelbolzen 2 umfasst zwischen seiner Aufnahme in einer Bohrung 6 am Trägerkörper 5 einen Kugelbolzenhals 4. der in den Kugelkopf 3 übergeht. Der in Fig. 1 dargestellte Kugelbolzen des Kugelgelenkes 1 erstreckt sich durch eine Bohrung 6 im Trägerkörper 5 und ist an diesen durch eine Bolzenhefestigung 9 arretiert. Die Bolzenbefestigung 9 des Kugelbolzens 2 ist in der Darstellung gemäß Fig. 1 als Rundniet ausgebildet. Daneben ist es durchaus möglich, den Kugelholzen 2 des Kugelgelenkes 1 in eine mit einem Innengewinde versehene Bohrung 6 einzuschrauben, damit sich dieser im Trägerkörper 5 arretieren lässt. Die Symmetrieachse des Kugelbolzens 2 des Kugelgelenkes 1 ist mit Bezugszeichen 7 bezeichnet. Am Kugelbolzen 2 ist eine ringförmig verlaufende Aufsatzfläche 8 ausgebildet, mit der der Kugelbolzen 2 auf der Oberseite des Trägerkörpers 5 aufsitzt.

Am Kugelkopf 3 des Kugelbolzens 2 ist eine Kugelschale 10 aufgenommen. Die Querachse der Kugelschale 10 ist mit Bezugszeichen 11 versehen, während die Hochachse 12 in der Position der Kugelschale 10 am Kugelkopf 3 des Kugelbolzens 2 mit der Symmetrieachse 7 des Kugelbolzens zusammenfällt. Der Schwenkbereich, um den die Kugelschale 10 im Kugelkopf 3 des Kugelbolzens 2 verkippbar ist, ist durch den mit Bezugszeichen 22 gekennzeichneten Winkel in Bezug auf ein Zentrum 31 des Kugelkopfes 3 angedeutet. An der Aussenseite der Kugelschale 10 ist innerhalb einer Ringnut 14 ein Ring 13 eingelassen. Die Aussenkontur 15 der Kugelschale 10 unterhalb der Querachse 11 umfasst eine kugelschalenseitige Dichtfläche 16, die in Bezug auf das Zentrum 31 des Kugelbolzens 3 in einem Radius 17 ausgebildet ist. Die Aussenkontur 15 der Kugelschale 10 unterhalb der Querachse 11 bildet eine erste, im wesentlichen sphärisch verlaufende Dichtfläche 16.

Den Kugelbolzenhals 4 umgebend ist dem Kugelbolzen 2 des Kugelgelenkes 1 ein Abdichtelement 18 zugeordnet. Das Abdichtelement 18, welches aus einem elastischen, verformbaren und witterungsbeständigen Kunststoffmaterial besteht, umfasst auf seiner Oberseite 20 eine Ringfläche 21, die die Aussenkontur 15 der Kugelschale 10 unterhalb von deren Querachse 11 umschliesst. An der Unterseite 27 des Abdichtelementes 18 sind der Ausführungsvariante des Kugelgelenkes gemäß Fig. 1 am Abdichtelement 18 eine erste federnde, elastische Ringfläche 23 und eine konzentrisch zu dieser liegende zweite federnde, elastische Ringfläche 24 ausgebildet. Mit den ersten und zweiten federnden, elastischen Ringflächen 23 bzw. 24 liegt das Abdichtelement 18 auf der Oberseite des Trägerkörpers 5 auf. Dabei steht die erste federnde, elastische Ringfläche 23 mit einer ersten Anlagefläche 28 und die zweite federnde, elastische Ringfläche 24 mit einer Anlagefläche 29 auf der Oberseite des Trägerkörpers 5 auf. Die erste federnde, elastische Ringfläche 23 sowie die zweite federnde, elastische Ringfläche 24 begrenzen eine ringförmige Ausnehmung 26 an der Unterseite 27 des Abdichtelementes 18. Die ringförmige Ausnehmung 26 an der Unterseite 27 des Abdichtelementes wird darüber hinaus durch die Oberseite des Trägerkörpers 5 begrenzt, wenn das Abdichtelement 18 in seiner Montageposition bei Aufbringen der Kugelschale 10 auf den Kugelbolzen 2 an der Trägerkörper 5 angestellt wird.

Der Hohlraum 25 zwischen der Innenseite der Kugelschale 10 und der Aussenfläche des Kugelbolzens 2 wird demnach sowohl durch die erste federnde, elastische Ringfläche 23 als auch die konzentrisch zu dieser, jedoch in einem geringeren Durchmesser ausgebildeten, weiteren zweiten, elastisch ausgebildeten Ringfläche 24 abgedichtet. Demnach wird durch die Ausgestaltung des Abdichtelementes 18 eine zweifache Abdichtung des Hohlraumes 25 gegen den Eintritt von Feuchtigkeit hinsichtlich der Oberseite des Trägerkörpers 5 erreicht. Durch die an der Innenseite der Ringfläche 21 ausgebildete abdichtelementseitige Dichtfläche 19, die an der Dichtfläche 16 des Kugelelementes 10 anliegt, wird eine Abdichtung an der Oberseite 20 des Abdichtelementes 18 zur relativ zum Abdichtelement 18 bewegbaren Kugelschale 10 des Kugelgelenkes 1 erreicht. Die Dichtfläche 16 der Kugelschale 10 hat darüber hinaus die Funktion, das Abdichtelement 18, relativ zum Kugelgelenk 1 zu zentrieren und auch zentriert zu halten.

Fig. 2 zeigt das Kugelgelenk gemäß Fig. 1 in einer verkippten Position.

Gemäß der Darstellung in Fig. 2 ist die Kugelschale 10 zum Zentrum 31 des Kugelkopfes 3 des Kugelbolzens 2 um einen Kippwinkel 41 gekippt. Demzufolge verläuft die Hochachse 12 der Kugelschale 10 winklig zur Symmetrieachse des Kugelbolzens 2, der am Trägerkörper 5 durch eine Bolzenbefestigung 9 arretiert ist. Die Bolzenbefestigung 9 hält die Aufsatzfläche 8 des Kugelbolzens 2 in Anlage an der Oberseite des Trägerkörpers 5.

Durch die an der Unterseite 27 des Abdichtelementes 18 ausgebildeten ersten und zweiten federnden, elastischen Ringflächen 23, 24 ist gewährleistet, dass das Abdichtelement mit einer Anstellkraft 32 gegen die Dichtfläche 16 der Kugelschale 10 gedrückt wird und demzufolge auch bei einer Verkippung der Kugelschale 10 um einen Kippwinkel 41 die Abdichtung an der Oberseite 20 des Abdichtelementes 18 zur Kugelschale 10 aufrecht erhalten wird. Aus der in Fig. 2 dargestellten verkippten Position 44 der Kugelschale 12 in Bezug auf den Kugelkopf 3 des Kugelbolzens 2 geht hervor, dass sich in dieser Position unterschiedlich groß bemessene Überlappungsbereiche der Dichtflächen 16 und 19 der Kugelschale 10 bzw. des Abdichtelementes 18 ersetzen. In Verkippungsrichtung der Kugelschale 10 gesehen, stellt sich eine größere Überlappung zwischen der Dichtfläche 16, der Kugelschale 10 und der abdichtelementseitigen Dichtfläche 19 an der Innenseite der Ringfläche 21 des Abdichtelementes 18 ein. Auf der gegenüberliegenden Seite ist die Überlappung zwischen der Dichtfläche 16, der Kugelschale 10 und der an der Innenseite der Ringfläche 21 des Abdichtelementes 18 ausgebildeten abdichtelementseitigen Ringfläche 19 geringer, da die Kugelschale 10 um das Zentrum 31 des Kugelkopfes 3 um den Verkippungswinkel 41 gekippt und von der Oberseite der Ringfläche 21 entfernt liegt.

Auch im verkippten Zustand 44 der Kugelschale 10 relativ zum Kugelbolzen 2 ist die Aufrechterhaltung der Dichtwirkung zwischen den Dichtflächen 16 der Kugelschale 10 und der abdichtelementseitigen Dichtfläche 19 an der Innenseite der Ringfläche 21 gegeben. Die Abdichtwirkung wird durch die Anstellkraft 32 aufrechterhalten, die über die an der Unterseite 27 des Abdichtelementes 18 ausgebildeten federnden, elastischen Ringflächen 23 und 24 erzeugt wird. Diese stützen sich auf der Oberseite des Trägerkörpers 5 ab und sind aufgrund des sich zwischen diesen an der Unterseite des Abdichtelementes 18 erstreckenden ringförmigen Hohlraumes 26 verformbar. Mit Bezugszeichen 30 ist der Aussendurchmesser des Abdichtelementes 18 an seiner schmalsten Aussenumfangsfläche gezeichnet. Der Aussendurchmesser der ersten, federnd ausgebildeten, elastischen Ringfläche 23 ist in Fig. 2 durch Bezugszeichen 35 gekennzeichnet.

Aufgrund der weiteren, zweiten federnd ausgebildeten Ringfläche 24 an der Unterseite 27 des Abdichtelementes 18, läßt sich dieses bei der Montage, d. h. beim Aufschieben auf den Kugelbolzen 2 verformen. Die sich radial nach innen erstreckende, als Federlippe ausführbare zweite federnde elastische Ringfläche 24 zentriert sich am Kugelbolzenhals 4 des Kugelbolzens 2 und sichert auch bei einer Manipulation des Kugelgelenkes 1 das Abdichtelement 18 unverlierbar.

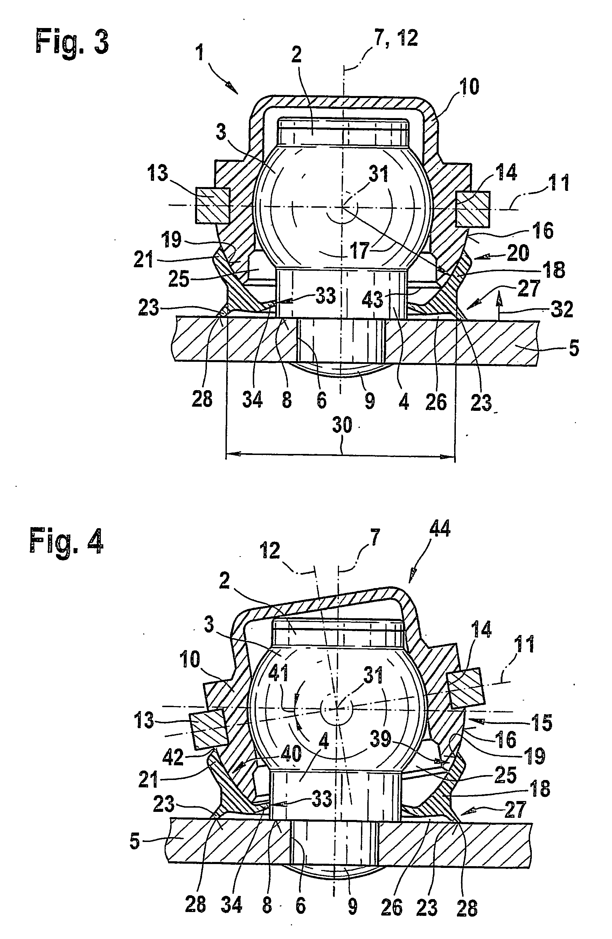

Fig. 3 zeigt eine weitere Ausführungsvariante eines Kugelgelenkes mit einem Dichtelement, welches einen dem Kugelbolzenhals zuweisende radial nach innen ausgebildete Ringfläche umfasst.

In der Darstellung gemäß Fig. 3 befindet sich die Kugelschale 10 des Kugelgelenkes 1 in einer nicht ausgelenkten Position, d. h. die Symmetrieachse 7 des Kugelbolzens 2 und die Hochachse 12 der Kugelschale 10 fallen zusammen.

Rechtwinklig zu den Achsen 7 bzw. 12 verläuft die Querachse 11 der Kugelschale 10. An der Aussenseite der Kugelschale 10 ist der Ring 13 in einer Ringnut 14 aufgenommen. Das in Fig. 3 dargestellte, den Hohlraum 25 zwischen der Innenseite der Kugelschale 10 und der Aussenumfangsfläche des Kugelbolzens 3 abdichtende Dichtelement 18 umfasst an der Unterseite 27 die erste federnde, elastische Ringfläche 23. Diese begrenzt einen ringförmig verlaufenden Hohlraum 26, der darüber hinaus durch die Oberseite des Trägerkörpers 5 und die Unterseite des Abdichtelementes 18 begrenzt ist. Der Aussendurchmesser der an der Unterseite 27 des Abdichtelementes 18 ausgebildeten ersten federnden, elastischen Ringfläche 23 entspricht dem Aussendurchmesser 35 des Abdichtelementes 18 an dessen Unterseite 27 gemäß Fig. 2.

Im Unterschied zum Abdichtelement 18 gemäß Fig. 2 liegt die zweite, hier als Radiallippe 34 ausgebildete weitere Ringfläche an einem Kontaktbereich 33 am Kugelbolzenhals 4 des Kugelbolzens 2 an. Die Radiallippe 34 bildet mit der Aussenseite des Kugelbolzens 2 einen Dichtbereich 33. Während in der Ausführungsvariante gemäß Fig. 1 das Dichtelement 18 mit der ersten federnden, elastischen Ringfläche 23 und der konzentrisch zu dieser verlaufenden zweiten federnden, elastischen Ringfläche 24 die Oberseite des Trägerkörpers 5 berührt und dort eine zweifache Abdichtung sicherstellt, dichtet das Dichtelement 18 gemäß der Ausführungsvariante in Fig. 3 den Hohlraum 25 einerseits durch die erste federnde, elastische Ringfläche 23 gegenüber der Oberseite des Trägerkörpers 5 und andererseits durch die Radiallippe 34 in einem Dichtbereich 33 am Kugelbolzen ab.

Auch der in Fig. 3 dargestellte Kugelbolzen 2 des Kugelgelenkes 1 ist innerhalb einer Bohrung 6 im Trägerkörper 5 aufgenommen und durch eine Bolzenbefestigung 9 mit diesem derart verbunden, dass die Aufsatzfläche 8 des Kugelbolzens 2 auf der Oberseite des Trägerkörpers 5 aufsitzt.

Die erste an der Unterseite 27 des Abdichtelementes 18 ausgebildete federnde, elastische Ringfläche 23 erzeugt eine Anstellkraft 32, welche das Abdichtelement 18 mit seinem an der Oberseite 20 ausgebildeten Ringfläche 21 gegen die Dichtfläche 16 der Kugelschale 10 anstellt. Die Verformbarkeit der ersten federnden, elastischen Ringfläche 23 ist dadurch gewährleistet, dass zwischen der Unterseite des Abdichtelementes 18 und der Oberseite des Trägerkörpers 5 eine ringförmig verlaufende Ausnehmung ausgebildet ist, die eine Verformung der ersten federnden, elastischen Ringfläche 23 erlaubt. Der Radius, mit dem sowohl die Dichtfläche 16 an der Aussenkontur 15 der Kugelschale 10 unterhalb der Querachse 11 ausgebildet ist, entspricht dem Radius, mit dem die abdichtelementseitige Dichtfläche 19 an der Innenseite der Ringfläche 21 des Abdichtelementes 18 ausgebildet ist. Aufgrund der durch die federnd ausgebildete Ringfläche 23 erzeugten Anstellkraft 32 wird eine optimale Dichtwirkung an der Kugelschale 10 des Kugelgelenkes 1 und der Oberseite des Trägerkörpers 5 erreicht. Die Dichtwirkung, die durch das Erzeugen der Anstellkraft 32 herbeigeführt wird, bleibt auch während einer Auslenkung der Kugelschale 10 relativ zum Kugelkopf 3 des Kugelbolzens 2 aufrecht erhalten.

Fig. 4 zeigt das Kugelgelenk gemäß Fig. 3 in einer verkippten Position.

Analog zur Darstellung gemäß Fig. 2 ist die Kugelschale 10 des Kugelgelenkes 1 gemäß Fig. 3 um das Zentrum 31 des Kugelkopfes 3 des Kugelbolzens 2 verkippt. Der Kippwinkel, um welchen die Kugelschale 10 relativ zur Querachse 11 ausgelenkt ist, ist mit Bezugszeichen 41 bezeichnet. Aufgrund der Verkippung der Kugelschale 10 um das Zentrum 31 des Kugelkopfes 3 des Kugelbolzens 2, bilden sich ein erster Überlappungsbereich 39 sowie ein zweiter Überlappungsbereich 40 zwischen dem Abdichtelement 18 und der Aussenkontur 15 der Kugelschale 10 aus. In Kipprichtung gesehen - bezogen auf das Zentrum 31 des Kugelkopfes 3 - ist der zweite Überlappungsbereich 40 größer als der erste, mit Bezugszeichen 39 identifizierte Überlappungsbereich. Innerhalb des zweiten Überlappungsbereiches 40 überdecken sich die Dichtfläche 16 an der Aussenseite der Kugelschale 10 und die abdichtelementseitige Dichtfläche 19 an der Innenseite der Ringfläche 21 im oberen Bereich des Abdichtelementes 18. Innerhalb des ersten Überlappungsbereiches 39 ist die Überdeckung zwischen der Dichtfläche 16 unterhalb der Querachse 11 des Kugelelementes 10 und der an der Innenseite des Abdichtelementes 18 ausgebildeten abdichtelementseitigen Dichtfläche geringer. Aufgrund der Anstellkraft 32, welche durch die erste federnde, elastische Ringfläche 23 auf das Abdichtelement 18 in Richtung auf die Dichtfläche 16 der Kugelschale 10 wirkt, ist auch bei einer Verkippung der Kugelschale 10 relativ zum Kugelbolzen 2 innerhalb des ersten Überlappungsbereiches 39 eine ausreichende Dichtwirkung gegen Feuchtigkeitseintritt von der Aussenseite in den Hohlraum 25 gewährleistet. Auch in der in Fig. 4 dargestellten verkippten Position 44 der Kugelschale 10 relativ zum Kugelkopf 3 des Kugelbolzens 2 entsteht eine zweifache Abdichtung des Hohlraumes 25 zwischen der Innenseite der Kugelschale 10 und der Aussenumfangsfläche des Kugelbolzens 2. Die erste Anlagefläche 28 der ersten federnden, elastischen Ringfläche 23 an der Oberseite des Trägerkörpers 5 bildet eine erste Abdichtstelle, während die zweite Abdichtstelle - in Bezug auf die Oberseite des Trägerkörpers 5 gegen Feuchtigkeitseintritt - im Kontaktbereich 33 zwischen der Radiallippe 34 und der im Kugelbolzenhals 4 gegeben ist.

Die Dichtfläche 16 und die an der Innenseite der Ringfläche 21 ausgebildete abdichtelementseitige Ringfläche 19 dichten den Hohlraum 25 hingegen an der Oberseite ab, wobei diese Abdichtung auch in einer verkippten Position 44 der Kugelschale 10 relativ zum Kugelbolzen 2 aufrecht erhalten bleibt. Daneben fungiert die an der Aussenkontur 15 der Kugelschale 10 ausgebildeten Dichtfläche 16 als Zentrierfläche für das Abdichtelement 18. Das Abichtelement 18 wird nach dem Überstülpen über den Kugelbolzen 2 und einer darauf folgenden Montage der Kugelschale 10 am Kugelkopf 3 des Kugelbolzens 2 durch dessen sich unterhalb der Querachse 11 erstreckende Dichtfläche 16 relativ zum Kugelbolzen 2 zentriert und verliersicher an diesem aufgenommen.

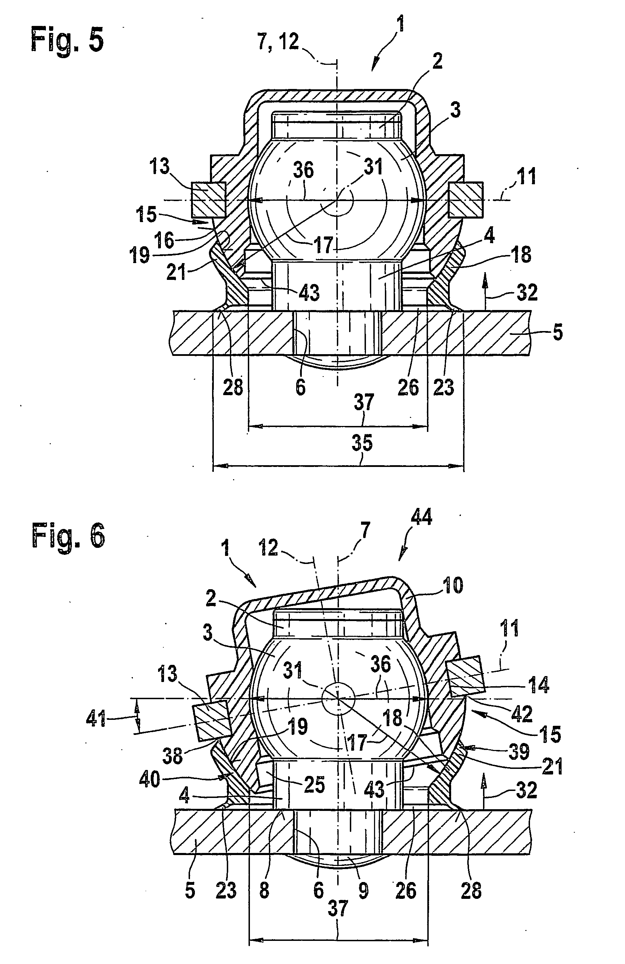

Fig. 5 zeigt ein Kugelgelenk, welches in einem Innendurchmesser ausgebildet ist, der den des Durchmessers des Kugelkopfes am Kugelbolzen 2 übersteigt.

Aus der Darstellung gemäß Fig. 5 geht hervor, dass das Abdichtelement 18, welches zwischen der Oberseite des Trägerkörpers 5 und der Kugelschale 10 des Kugelgelenkes 1 aufgenommen ist, einen Innendurchmesser 37 aufweist, der den Aussendurchmesser 36 des Kugelkopfes 3 am Kugelbolzen 2 übersteigt. Dadurch lässt sich das Abdichtelement 18 gemäß der Ausführungsvariante in Fig. 5 vor Montage der Kugelschale 10 am Kugelkopf 3 leicht über den Kugelbolzen 2 aufstülpen, so dass das Abdichtelement 18 lose über den Kugelbolzen 2 fallen kann. Bei einer dann automatisch beim Einpressen der Kugelschale 10 erfolgenden Verbindung wird das Abdichtelement 18 mit seiner Ringfläche 21 an der Dichtfläche 16 der Kugelschale 10 des Kugelgelenkes 1 zentriert. Die Dichtfläche 16 ist in Bezug auf das Zentrum 31 des Kugelkopfes 3 mit einem Radius 17 ausgebildet, welcher dem Radius entspricht, mit der die Dichtfläche 19 an der Innenseite der Ringfläche 21 des Abdichtelementes 18 ausgeführt ist. An der Unterseite des Abdichtelementes 18 ist - analog zu den Abdichtelementen 18 gemäß der Fig. 1, 2, 3 und 4 eine erste federnde, elastische Ringfläche 23 ausgebildet. Diese erzeugt aufgrund ihrer Verformbarkeit eine Anstellkraft 32, mit welcher das Abdichtelement 18 mit seiner Ringfläche 21 an die Aussenkontur 19 der Kugelschale 10 zur Verbesserung der Abdichtwirkung angestellt wird. Die erste, federnde elastische Ringfläche 23 ist in einem Aussendurchmesser 35 ausgebildet. Die erste federnde, elastische Ringfläche 23 an der Oberseite des Trägerkörpers 5 dichtet das Kugelgelenk 1 gegen von aussen eintretende Feuchtigkeit ab.

Der Vollständigkeit halber sei erwähnt, dass in der Darstellung gemäß Fig. 5 die Hochachse 12 der Kugelschale 10 mit der Symmetrieachse 7 des Kugelbolzens 2 zusammenfällt. An der Aussenseite der Kugelschale 10 ist innerhalb einer Ringnut 14 ein Ring 13 aufgenommen. Mit Bezugszeichen 43 ist die untere Umlaufkante der Kugelschale 10 bezeichnet, welche die Dichtfläche 16 an der Kugelschale 10 unterhalb von deren Querachse 11 begrenzt. Die Verformbarkeit der ersten federnden, elastischen Ringfläche 23 wird dadurch unterstützt, dass sich im montierten Zustand des Abdichtelementes 18 zwischen dessen Unterseite 27 und der Oberseite des Trägerkörpers 5 ein ringförmig verlaufender Hohlraum 26 ausbildet, der die maximale Verformbarkeit der ersten federnden, elastischen Ringfläche 23 bestimmt.

Fig. 6 zeigt das Kugelgelenk gemäß Fig. 5 in einer verkippten Position. In der verkippten Position 44 der Kugelschale 10 des Kugelgelenkes 1 relativ zum Kugelkopf 3 des Kugelbolzens 2, ist die Kugelschale 10 um den Kippwinkel 41 geneigt. Dadurch liegt die Hochachse 12 der Kugelschale 10 winklig zur Symmetrieachse 7 des Kugelbolzens 2. Der Kugelbolzen 2 ist in axialer Richtung durch eine Bolzenbefestigung 9 in einer Bohrung 6 des Trägerkörpers 5 aufgenommen. Die Bolzenbefestigung 9 - hier ausgebildet als eine Nietverbindung - kann ebensogut als eine Schraub- oder Mehrkeilverbindung ausgebildet sein und gewährleistet, dass der Kugelbolzen 2 mit seiner Aufsatzfläche 8 an der Oberseite des Trägerkörpers 5 aufsitzt. An der Aussenfläche der Kugelschale 10 des Kugelgelenkes 1 ist unterhalb des Ringes 13, der in die Ringnut 14 eingelassen ist, ein Anschlag 42 ausgebildet. In der verkippten Position 44 gemäß Fig. 6 liegt die Oberseite der Ringfläche 21 des Abdichtelementes 18 am Anschlag 42 des Rings 13 an und begrenzt den maximalen Kippwinkel 41. Der Kontakt der Ringfläche 21 des Abdichtelementes 18 mit dem Ring 13 ist durch Bezugszeichen 38 gekennzeichnet. Auf der in Kipprichtung liegenden Seite der Kugelschale 10 stellt sich zwischen der Dichtfläche 16 der Kugelschale 10 und der Ringfläche 21 des Abdichtelementes 18 ein zweiter Überlappungsbereich 40 ein, während sich auf der gegenüberliegenden Seite zwischen der Dichtfläche 16 an der Aussenkontur 15 der Kugelschale 10 ein erster Überlappungsbereich 39 zwischen Kugelschale 10 und Ringfläche 21 einstellt. Sowohl die an der Innenseite der Ringfläche 21 liegende abdichtelementseitige Ringfläche 19 als auch die Dichtfläche 16 an der Aussenkontur 15 der Ringschale 10 sind im identischen Radius 17 ausgebildet - bezogen auf das Zentrum 31 des Kugelkopfes 3. Der Aussendurchmesser des Kugelkopfes 3 ist mit Bezugszeichen 36 gekennzeichnet, der Innendurchmesser des Abdichtelementes 18, welcher den Aussendurchmesser 36 des Kugelkopfes 3 übersteigt, ist mit Bezugszeichen 37 gekennzeichnet. Durch die Verformbarkeit der ersten federnden elastischen Ringfläche 23 an der Unterseite 20 des Abdichtelementes 18 und den an der Unterseite 27 durch Trägerkörper 5 und Abdichtelement 18 begrenzten ringförmigen Hohlraum 26, ist eine Verformbarkeit der ersten federnden, elastischen Ringfläche 23 gewährleistet, welche eine Anstellkraft 32 erzeugt, mit der das Abdichtelement 18 mit seiner Ringfläche 21 an die Aussenkontur 15 der Kugelschale 10 des Kugelgelenkes 1 angestellt wird.

Aufgrund des größeren Innendurchmessers 37 des Abdichtelementes 18 im Vergleich zum Aussendurchmesser 36 des Kugelkopfes 3 des Kugelbolzens 2, lässt sich das Abdichtelement 18 einfach über den Kugelbolzen 2 stülpen und wird durch die am Kugelkopf 3 montierte Kugelschale 10 zentriert. Im montierten Zustand der Kugelschale 10 am Kugelkopf 3 des Kugelbolzens 2 ist das Abdichtelement 18 unverlierbar am Kugelgelenk 1 augenommen. Der Hohlraum 25 zwischen der Innenseite der Kugelschale 10 und der Aussenseite des Kugelbolzens 2 ist durch die erste federnde, elastische Ringfläche 23 hinsichtlich des Trägerkörpers 5 abgedichtet. Im verkippten Zustand 44 der Kugelschale 10 erfolgt die Abdichtung des Hohlraumes 25 an der Oberseite durch die Anstellung des Abdichtelementes 18 aufgrund der Anstellkraft 32 an die Aussenkontur 15 der Kugelschale 10. Die Erzeugung der Anstellkraft 32 durch die Verformbarkeit der ersten federnden, elastischen Ringfläche 23 hält die Abdichtwirkung auch in dem ersten Überlappungsbereich 39 zwischen der Dichtfläche 16 der Kugelschale 10 und der abdichtelementseitigen Dichtfläche 19 an der Ringfläche 21 des Abdichtelementes 18 aufrecht.

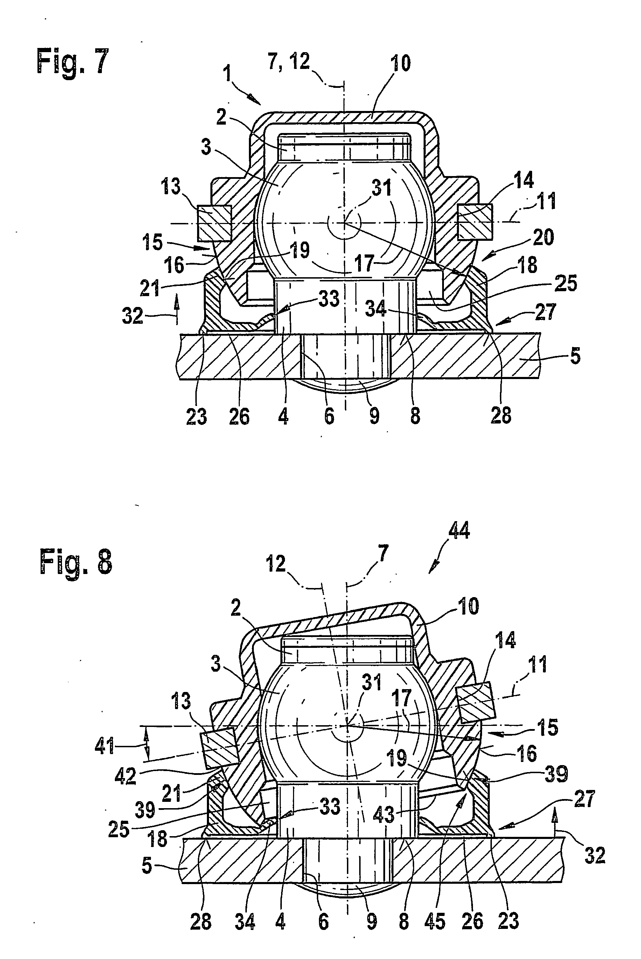

Fig. 7 zeigt ein Kugelgelenk mit einem Dichtelement gemäß einer weiteren Ausführungsvariante.

Im Unterschied zu den Ausführungen der Dichtelemente 18 gemäß der Fig. 1 bis 6, umschließt die Ringfläche 21 des Abdichtelementes 18 die Dichtfläche 16 an der Aussenkontur 15 der Kugelschale 10 in einem verringerten Anlagebereich. Die an der Ringfläche 21 ausgebildete abdichtelementseitige Dichtfläche 19 ist in dem Radius 17 ausgebildet, in welchem auch die Dichtfläche 16 an der Aussenkontur 15 der Kugelschale 10 ausgeführt ist. An der Unterseite 27 des Abdichtelementes 18 gemäß Fig. 7 ist analog zu den bisher beschriebenen Ausführungsvarianten des Abdichtelementes 18 eine erste federnde, elastische Ringfläche 23 ausgebildet. Radial nach innen verlaufend umfasst das Abdichtelement 18 eine Radiallippe 34, die innerhalb eines Dichtbereiches 33 an der Aussenseite des Kügelbolzenhalses 4 anliegt. Die Verformbarkeit der ersten federnden, elastischen Ringfläche 23 wird dadurch begünstigt, dass an der Unterseite 27 des Abdichtelementes 18 am Trägerkörper 5 montierten Zustand ein ringförmiger Hohlraum 26 entsteht, der die Verformbarkeit der ersten federnden, elastischen Ringfläche 23 ermöglicht, die an der Oberseite 5 mti einer ersten Anlagefläche 28 anliegt.

Der Kugelbolzen 2 des Kugelgelenkes 1 gemäß Ausführungsvariante in Fig. 7 erstreckt sich durch eine Bohrung 6 im Trägerkörper 5 und ist durch eine hier als Rundniet ausgeführte Bolzenbefestigung 9 mit dem Trägerkörper 5 verbunden und in axiale Richtung gesichert.

Aufgrund der Verformbarkeit der ersten federnden, elastischen Ringfläche 23 wird eine auf die Dichtfläche 16, 19 wirkende Anstellkraft 32 am Abdichtelement 18 erzeugt, welches die Abdichtwirkung der Dichtflächen 16, 19 auch in einem verkippten Zustand der Kugelschale 10 relativ zum Kugelkopf 3 des Kugelbozens 2 ermöglicht (vergl. Fig. 8).

Der Darstellung gemäß Fig. 8 ist das Kugelgelenk gemäß Fig. 7 in verkippten Zustand zu entnehmen. Analog zu den verkippten Positionen 44 gemäß der Darstellungen in den Fig. 2, 4 und 6, ist die Kugelschale 10 am Kugelkopf 3 des Kugelbolzens 2 um einen Kippwinkel 41 geneigt. Die Anlagefläche 42 des Ringes 13, der in einer Ringnut 14 an der Kugelschale 10 aufgenommen ist, liegt etwa oberhalb der oberen Begrenzung der Ringfläche 21 des Abdichtelementes 18. Aufgrund der Verkippung der Kugelschale 10 relativ zum Kugelkopf 3 liegen die Symmetrieachse 7 des Kugelbolzens 2 und die Hochachse 12 der Kugelschale 10 um den Kippwinkel 41 versetzt zueinander. Die Dichtfläche 16 an der Aussenkontur 15 der Kugelschale 10 und an der die Dichtfläche 19 aufnehmenden Ringfläche 21 des Abdichtelementes 18 sind in identischem Radius 17 bezogen auf das Zentrum 31 des Kugelkopfes 3 ausgebildet. Der Hohlraum 25 zwischen der Innenseite der Kugelschale 10 und der Aussenkontur des Kugelbolzens 2 wird durch die erste federnde elastische Ringfläche 23 und durch die sich radial zu dieser erstreckende Radiallippe 34 abgedichtet. Die Radiallippe 34 kontaktiert den Kugelbolzenhals 4 an einem Dichtbereich 33. Auf der Oberseite des Abdichtelementes 18 wird eine Abdichtung des Hohlraumes 25 dadurch erreicht, dass auch im verkippten Zustand 44 der Kugelschale 10 stets eine Überlappung 39 zwischen der Dichtfläche 16 und der Kugelschale 10 und der an der Ringfläche 21 ausgebildeten abdichtelementseitigen Dichtfläche 19 aufrecht erhalten bleibt.

Im Unterschied zu den in Fig. 2, 4 und 6 dargestellten verkippten Positionen 44 der Kugelschale 10 relativ zum Kugelkopf 3 stellen sich beim Verkippen der Kugelschale 10 aufgrund der Geometrie der abdichtelementseitigen Dichtfläche 19 an der Ringfläche 21 identische Überlappungsbereiche 39 ein. Die Dichtfläche 19 des Abdichtelementes 18 gemäß der Ausführungsvariante nach Fig. 8 liegt im Bereich eines Kragens 45 des Abdichtelementes 18. Die Überlappungsbereiche 39 sind sowohl auf der in Kipprichtung liegenden Seite des Abdichtelementes 18 als auch auf der dieser gegenüberliegenden Seite des Abdichtelementes 18 aufgrund der Geometrie der abdichtelementseitigen Dichtfläche 19 identisch. Im montierten Zustand des Abdichtelementes 18 nach Einpressen der Kugelschale 10 auf den Kugelkopf 3 des Kugelbolzens 2 stellt sich aufgrund eines zwischen der Oberseite des Trägerkörpers 5 und der Unterseite des Abichtelementes 18 vorgesehenen ringförmigen Hohlraumes 26 an der Unterseite 27 eine Verformbarkeit der ersten federnden, elastischen Ringfläche 23 ein. Durch die Verformbarkeit der ersten federnden, elastischen Ringfläche 23 wird eine Anstellkraft 32 erzeugt, die das Abdichtelement 18 mit seiner abdichtelementseitigen Dichtfläche 19 hin an die Aussenkontur 15 der Kugelschale 10 ausgebildete Dichtfläche 16 anstellt. Mit Bezugszeichen 43 ist die untere Umlaufkante der Kugelschale 10 bezeichnet, an der die Dichtfläche 16 an der Aussenkontur 15 der Kugelschale 10 ausläuft.

Mit der erfindungsgemäß vorgeschlagenen Ausführung eines Kugelgelenkes lässt sich eine leichtere Montage ermöglichen, die automatisiert werden kann. Das am Kugelgelenk 1 eingesetzte Abdichtelement 18 ist derart ausgebildet, dass es eine Anstellkraft 32 erzeugt, die eine bessere Dichtwirkung zwischen einer relativ zum Abdichtelement 18 bewegbaren Kugelgelenkkomponente - hier der Kugelschale 10 - ermöglicht. Ferner hält sich bei der Montage des erfindungsgemäß vorgeschlagenen Kugelgelenkes 1 beim Einpressen der Kugelschale 10 auf den Kugelbolzen 2 eine automatische Zentrierung des Abdichtelementes 18 mit seiner Ringfläche 21 an der Dichtfläche 16 der Kugelschale 10 ein. Die Dichtfläche 16 hat demnach neben ihrer Abdichtfunktion auch eine Zentrierungsfunktion hinsichtlich des Abdichtelementes 18. Aufgrund des eingesetzten, verformbaren, witterungsbeständigen Kunststoffmaterials lässt sich im Vergleich zur herkömmlichen Faltenbalglösungen ein Preisvorteil erzielen.

### Bezugszeichenliste

- 1: Kugelgelenk
- 2: Kugelbolzen
- 3: Kugelkopf
- 4: Kugelbolzenhals
- 5: Trägerkörper
- 6: Bohrung
- 7: Symmetrieachse Kugelbolzen
- 8: Aufsatzfläche
- 9: Bolzenbefestigung
- 10: Kugelschale
- 11: Querachse Kugelschale
- 12: Hochachse Kugelschale
- 13: Ring
- 14: Ringnut
- 15: Aussenkontur Kugelschale
- 16: Dichtfläche Kugelschale
- 17: Radius Dichtflächen
- 18: Abdichtelement
- 19: abdichtelementseitige Dichtfläche
- 20: Oberseite Abdichtelement
- 21: Ringfläche Abdichtelement
- 22: Kippwinkelbereich Kugelschale
- 23: erste federnde, elastische Ringfläche
- 24: zweite federnde, elastische Ringfläche
- 25: Hohlraum Kugelgelenk
- 26: ringförmige Ausnehmung
- 27: Unterseite Abdichtelement
- 28: erste Anlagefläche
- 29: zweite Anlagefläche
- 30: Aussendurchmesser verjüngter Bereich Abdichtelement
- 31: Zentrum Kugelkopf
- 32: Anstellkraft
- 33: Dichtbereich Kugelbolzenhals
- 34: Radiallippe
- 35: Aussendurchmesser erste Federn der elastischen Ringfläche 23
- 36: Durchmesser Kugelkopf
- 37: Innendurchmesser Abdichtelement
- 38: Kontakt Abdichtelement 18 / Ring 13
- 39: erster Überlappungsbereich
- 40: zweiter Überlappungsbereich
- 41: Kippwinkel Kugelschale zum Kugelkopf
- 42: Anschlag
- 43: Umlaufkante Kugelschale
- 44: verkippte Position
- 45: Kragen

## Patentansprüche

1. Kugelgelenk (1) mit einer Kugelschale (10) und einem Kugelbolzen (2) und einem den Kugelbolzen (2) an dessen Kugelbolzenhals (4) umgebenen Abdichtelement (18), wobei der Kugelbolzen (2) an einem Trägerkörper (5) befestigt ist und das Abdichtelement (18) zwischen dem Trägerkörper (5) und der Kugelschale (10) angeordnet ist, sowie an einer der Kugelschale (10) zuweisenden Seite (20) eine umlaufende Ringfläche (21) aufweist, die eine Dichtfläche (16) der Kugelschale (10) umgibt, wobei die Dichtfläche (16) der Kugelschale (10) in einem Radius (17) bezogen auf das Zentrum (31) eines Kugelkopfs (3) des Kugelbolzens (2) ausgeführt ist, der einem Radius (17) entspricht, den das Abdichtelement (18) auf der der Kugelschale (10) zuweisenden Seite aufweist, und auf einer dem Trägerkörper (5) zuweisenden Seite (27) eine elastische Ringfläche (23) aufweist, die das Abdichtelement (18) an die Kugelschale (10) anstellt und sich auf der Oberseite des Trägerkörpers (5) abstützt, **dadurch gekennzeichnet, dass** an der dem Trägerkörper (5) zuweisenden Seite (27) des Abdichtelementes (18) eine konzentrisch zur ersten federnden, elastischen Ringfläche (23) verlaufende weitere zweite federnde, elastische Ringfläche (24) ausgebildet ist, die sich ebenfalls auf der Oberseite des Trägerkörpers (5) abstützt und das Abdichtelement (18) an die Kugelschale (10) anstellt, wobei die erste und zweite federnde, elastische Ringfläche (23, 24) als Federlippen ausgeführt sind und jeweils eine Dichtstelle (28, 29) zum Trägerkörper (5) darstellen.

2. Kugelgelenk (1) nach Anspruch 1, **dadurch gekennzeichnet, dass** die erste und die zweite federnde, elastische Ringfläche (23, 24) des Abdichtelementes (18) eine ringförmige Ausnehmung (26) begrenzen, die sich im auf der Oberseite des Trägerkörpers (5) montierten Zustand des Abdichtelementes (18) bildet.

3. Kugelgelenk (1) nach Anspruch 2, **dadurch gekennzeichnet, dass** die äußere als Federlippe ausgeführt, elastische Ringfläche (23) ausgehend von der zugeordneten Dichtstelle (28) nach innen geneigt ist, während die innere als Federlippe ausgeführte, elastische Ringfläche (24) ausgehend von der zugeordneten Dichtstelle (29) nach außen geneigt ist.

4. Kugelgelenk (1) nach Anspruch 2 oder 3, **dadurch gekennzeichnet, dass** die ringförmige Ausnehmung (26) so gestaltet ist, dass sie die maximale Verformbarkeit der äußeren federnden, elastischen Ringfläche (23) begrenzt.

## Claims

1. Ball-and-socket joint (1) with a ball socket (10) and a ball pin (2), and with a sealing element (18) which surrounds the ball pin (2) at the neck (4) thereof, wherein the ball pin (2) is fastened to a support body (5), and the sealing element (18) is arranged between the support body (5) and the ball socket (10) and has, on a side (20) facing the ball socket (10), an encircling annular surface (21) which surrounds a sealing surface (16) of the ball socket (10), wherein the sealing surface (16) of the ball socket (10) is formed in a radius (17) with respect to the centre (31) of a ball head (3) of the ball pin (2), said radius corresponding to a radius (17) which the sealing element (18) has on the side facing the ball socket (10), and said sealing element (18) has, on a side (27) facing the support body (5), an elastic annular surface (23) which positions the sealing element (18) against the ball socket (10) and is supported on the upper side of the support body (5), **characterized in that** a further, second resilient, elastic annular surface (24) which runs concentrically with respect to the first resilient, elastic annular surface (23) is formed on that side (27) of the sealing element (18) which faces the support body (5), said further annular surface likewise being supported on the upper side of the support body (5) and positioning the sealing element (18) against the ball socket (10), the first and second resilient, elastic annular surfaces (23, 24) being designed as spring lips and respectively constituting a sealing point (28, 29) with respect to the support body (5).

2. Ball-and-socket joint (1) according to Claim 1, **characterized in that** the first and the second resilient, elastic annular surfaces (23, 24) of the sealing element (18) delimit an annular recess (26) which is formed in the state of the sealing element (18) in which it is fitted on the upper side of the support body (5).

3. Ball-and-socket joint (1) according to Claim 2, **characterized in that** the outer elastic annular surface (23) designed as a spring lip is inclined inwards from the associated sealing point (28) while the inner elastic annular surface (24) designed as a spring lip is inclined outwards from the associated sealing point (29).

4. Ball-and-socket joint (1) according to Claim 2 or 3, **characterized in that** the annular recess (26) is designed in such a manner that it limits the maximum deformability of the outer resilient, elastic annular surface (23).

## Revendications

1. Articulation sphérique (1) comprenant une coque sphérique (10) et un boulon sphérique (2) ainsi qu'un élément d'étanchéité (18) entourant le boulon sphérique (2) au niveau de son col de boulon sphérique (4), le boulon sphérique (2) étant fixé sur un corps porteur (5) et l'élément d'étanchéité (18) étant disposé entre le corps porteur (5) et la coque sphérique (10), et présentant d'un côté (20) tourné vers la coque sphérique (10) une surface annulaire périphérique (21), qui entoure une surface d'étanchéité (16) de la coque sphérique (10), la surface d'étanchéité (16) de la coque sphérique (10) étant réalisée dans un rayon (17) par rapport au centre (31) d'une tête sphérique (3) du boulon sphérique (2), qui correspond à un rayon (17) que présente l'élément d'étanchéité (18) du côté tourné vers la coque sphérique (10), et présentant, d'un côté (27) tourné vers le corps porteur (5), une surface annulaire élastique (23), qui applique l'élément d'étanchéité (18) contre la coque sphérique (10) et qui s'appuie sur le côté supérieur du corps porteur (5), **caractérisée en ce que** du côté (27) de l'élément d'étanchéité (18) tourné vers le corps porteur (5), est réalisée une deuxième surface annulaire élastique à ressort supplémentaire (24) s'étendant concentriquement à la première surface annulaire élastique à ressort (23), qui s'appuie également sur le côté supérieur du corps porteur (5) et qui applique l'élément d'étanchéité (18) contre la coque sphérique (10), la première et la deuxième surface annulaire élastique à ressort (23, 24) étant réalisées sous forme de lèvres à ressort et constituant chacune un point d'étanchéité (28, 29) par rapport au corps porteur (5).

2. Articulation sphérique (1) selon la revendication 1, **caractérisée en ce que** la première et la deuxième surface annulaire élastique à ressort (23, 24) de l'élément d'étanchéité (18) délimitent un évidement annulaire (26) qui se forme dans l'état monté de l'élément d'étanchéité (18) du côté supérieur du corps porteur (5).

3. Articulation sphérique (1) selon la revendication 2, **caractérisée en ce que** la surface annulaire élastique extérieure (23) réalisée sous forme de lèvre à ressort est inclinée vers l'intérieur depuis le point d'étanchéité (28) associé, tandis que la surface annulaire élastique intérieure (24) réalisée sous forme de lèvre à ressort est inclinée vers l'extérieur à partir du point d'étanchéité associé (29).

4. Articulation sphérique (1) selon la revendication 2 ou 3, **caractérisée en ce que** l'évidement annulaire (26) est configuré de telle sorte qu'il délimite la capacité de déformation maximale de la surface annulaire élastique à ressort extérieure (23).
